# EUROPÄISCHE PATENTSCHRIFT

(11) **EP 3 685 459 B1**
(45) Veröffentlichungstag und Bekanntmachung des Hinweises auf die Patenterteilung: **20.01.2021**
(21) Anmeldenummer: 19812724.3
(22) Anmeldetag: 21.11.2019
(51) Int. Cl.: H01M 4/04, H01M 4/24, H01M 4/26, H01M 4/29, H01M 4/50, H01M 4/52, H01M 10/30, H01M 4/02

(54) **REVERSIBLE MANGANDIOXIDELEKTRODE, VERFAHREN ZU DEREN HERSTELLUNG, DEREN VERWENDUNG SOWIE DIESE ENTHALTENDE, WIEDER AUFLADBARE ALKALISCHE MANGAN-BATTERIE**
REVERSIBLE MANGANESE DIOXIDE ELECTRODE, METHOD FOR PRODUCING IT, ITS USE AS WELL AS RECHARGEABLE ALKALINE MANGANESE BATTERY COMPRISING IT
ÉLECTRODE RÉVERSIBLE AU DIOXYDE DE MANGANÈSE, SA MÉTHODE DE FABRICATION, SON UTILISATION AINSI QU'UNE BATTERIE ALCALINE AU MANGANÈSE RECHARGEABLE LA COMPRENANT

(30) Priorität: 06.12.2018 DE 102018131168
(43) Veröffentlichungstag der Anmeldung: 29.07.2020
(73) Patentinhaber: Zentrum für Sonnenenergie- und Wasserstoff-Forschung Baden-Württemberg Gemeinnützige Stiftung, 70563 Stuttgart (DE)
(72) Erfinder: JÖRISSEN, Ludwig, 89231 Neu-Ulm (DE); ASANTE, Jerry Bamfo, 89564 Nattheim (DE); BÖSE, Olaf, 89091 Neu-Ulm (DE)
(74) Vertreter: Ter Meer Steinmeister & Partner
(86) Internationale Anmeldenummer: PCT/EP2019/082056
(87) Internationale Veröffentlichungsnummer: WO 2020/074749

(56) Entgegenhaltungen:
- EP-A1- 1 699 099
- WO-A1-2017/085173
- JP-A- H10 172 551
- JP-A- 2005 243 602
- US-A- 5 508 121

## Beschreibung

### GEBIET DER ERFINDUNG

Die Erfindung betrifft eine reversible Mangandioxidelektrode aus einem elektrisch leitfähigen Trägermaterial mit einer Nickeloberfläche, einer auf dem Trägermaterial aufgebrachten Nickelschicht aus sphärischen Nickelpartikeln mit einer inneren Porenstruktur und einer auf den Nickelpartikeln aufgebrachten Mangandioxidschicht, ein Verfahren zur Herstellung einer solchen Mangandioxidelektrode, deren Verwendung in wieder aufladbaren alkalischen Batteriesystemen, insbesondere Alkali-Mangan-Batterien sowie eine solche reversible Mangandioxidelektrode enthaltende, wieder aufladbare alkalische Mangan-Batterie, insbesondere Alkali-Mangan-Batterie.

### TECHNISCHER HINTERGRUND UND STAND DER TECHNIK

Bei der Alkali-Mangan-Batterie beziehungsweise der Alkali-Mangan-Zelle, handelt es sich um einen wichtigen elektrochemischen Energiespeicher aus der Familie der Zink-Braunstein-Zellen. Die Alkali-Mangan-Zelle wird zu den Primärelementen, das heißt den nicht-wiederaufladbaren Batterien gezählt, obwohl sie grundsätzlich begrenzt wieder aufladbar ist. Zur Wiederaufladung vorgesehene Versionen werden als "RAM-Zellen" (Rechargeable Alkaline Manganese) bezeichnet, die zu den Sekundärelementen (Akkumulatoren) gerechnet werden.

Bei der Alkali-Mangan-Zelle, auch als Zink-Manganoxid-Zelle bezeichnet, wird für die positive Elektrode Mangandioxid verwendet, wobei als alkalischer Elektrolyt üblicherweise eine wässrige Lösung von Kaliumhydroxid eingesetzt wird. Die Kathode (positive Elektrode) liegt hierbei außen und ist ein innen mit Mangandioxid beschichteter Metallbecher. Die in der Mitte der Zelle liegende Anode (negative Elektrode) besteht üblicherweise aus Zinkpulver.

Die Zyklisierung von Mangandioxid-Elektroden beschränkte sich unter diesen Bedingungen auf wenige Zyklen mit geringer Leistungsfähigkeit. Das Interesse an Mangandioxid als positives Elektrodenmaterial für alkalische Elektrolyte beruht auf seiner hohen spezifischen Kapazität, seinem niedrigen Preis und der geringen Toxizität. Allerdings verhinderte die geringe Zyklisierbarkeit aufgrund der hohen irreversiblen Verluste während der Ladung bisher den Einsatz von Mangandioxid als positives Elektrodenmaterial in wieder aufladbaren Batterien mit alkalischen Elektrolyten.

RAM-Zellen können etwa 10-20 Vollzyklen (bei 100 % Entladetiefe) oder etwa 200 Zyklen bei geringer Entladetiefe von 10 - 20 % liefern. Nach 10 Vollzyklen (100 % Entladetiefe) mit einer Entladestromrate von 0,08 C stehen nur noch 60 % der anfänglichen Kapazität zur Verfügung. Darüber hinaus sind sie nur für sehr geringe Entladestromraten zwischen 0,03 und 0,6 C nutzbar. RAM-Zellen eignen sich daher nur für Niedrigstrom-Anwendungen, wie zum Beispiel Uhren oder Fernbedienungen. Für Hochstromanwendungen wie zum Beispiel Digitalkameras, Akku-Werkzeuge oder als Antriebsbatterien in Modellfahrzeugen sind sie nicht geeignet und können dabei beschädigt werden. Desweiteren führt eine Erhöhung der Entladestromrate von 0,03 C auf 0,5 C bereits zu einer Halbierung der verfügbaren Kapazität. RAM-Zellen dürfen, um ihre Wiederaufladefähigkeit nicht zu verlieren, nicht zu tief entladen werden. Werden RAM-Zellen bis zu einer Entladeschlussspannung je Zelle von 1,42 V entladen, beträgt die erreichbare Zyklenzahl einige 100. Bei einer Entladung bis zu 1,32 V reduziert sich die Zyklenzahl auf einige 10. Bei einer weiteren Entladung können RAM-Zellen nicht mehr oder nur noch mit einer deutlich reduzierten Kapazität geladen werden.

Die US 5,508,121 A offenbart eine Elektrode für eine alkalische Batterie, die aus einer Mischung aus zumindest Nickelhydroxid und Mangan besteht, wobei diese Mischung auf einem Trägermaterial aus Nickelschaum beschichtet ist.

Die EP 1 699 099 A1 und die JP 2005 243 602 A offenbaren eine Elektrode für eine alkalische Batterie, die aus einer Mischung aus Nickeloxyhydroxid und Mangan (im Falle der EP 1 699 099 A1) und zusätzlich Cobalt (im Falle der JP 2005 243 602 A) besteht, wobei diese Mischung jeweils auf einem Trägermaterial aus Nickelschaum beschichtet ist.

Die JP H10 172 551 A offenbart eine Elektrode für eine alkalische Batterie, die aus Cobalt beschichteten Nickelhydroxid-Partikeln besteht, wobei diese Partikel auch Mangan enthalten.

### AUFGABE DER ERFINDUNG

Der Erfindung liegt die Aufgabe zugrunde, unter Vermeidung der Nachteile des Standes der Technik eine reversible Mangandioxidelektrode sowie ein Verfahren zu deren Herstellung vorzusehen, welche als Arbeitselektrode in wieder aufladbaren alkalischen Batteriesystemen, insbesondere Alkali-Mangan-Zellen eingesetzt werden kann. Ebenfalls soll eine wieder aufladbare alkalische Mangan-Batterie, insbesondere Alkali-Mangan-Batterie vorgesehen werden, welche hohe Entladestromraten erlaubt und eine gute Zyklenstabilität aufweist ohne signifikante Kapazitätsverluste zu erleiden.

### ZUSAMMENFASSUNG DER ERFINDUNG

Die vorgenannten Aufgaben werden erfindungsgemäß gelöst durch eine reversible Mangandioxidelektrode gemäß Anspruch 1, ein Verfahren zu deren Herstellung gemäß Anspruch 7, deren Verwendung gemäß Anspruch 13 sowie eine wiederaufladbare alkalische Mangan-Batterie gemäß Anspruch 14.

Bevorzugte beziehungsweise besonders zweckmäßige Ausführungsformen des Anmeldungsgegenstandes sind in den Unteransprüchen angegeben.

Gegenstand der Erfindung ist somit eine reversible Mangandioxidelektrode, umfassend ein elektrisch leitfähiges Trägermaterial mit einer Nickeloberfläche, eine auf dem Trägermaterial aufgebrachte Nickelschicht aus aneinander haftenden, sphärischen Nickelpartikeln mit einer inneren Porenstruktur und eine auf den Nickelpartikeln aufgebrachte Mangandioxidschicht, wobei die Mangandioxidschicht auch in der inneren Porenstruktur der Nickelpartikel vorhanden ist.

Gegenstand der Erfindung ist ebenfalls ein Verfahren zur Herstellung einer solchen reversiblen Mangandioxidelektrode, umfassend folgende Schritte:
a) Vorsehen einer Elektrodenstruktur aus einem elektrisch leitfähigen Trägermaterial mit einer Nickeloberfläche und einer auf dem Trägermaterial aufgebrachten Nickelschicht aus aneinander haftenden, sphärischen, porösen Nickelpartikeln mit einer inneren Porenstruktur,
b) Abscheiden einer Mangan(II)-hydroxidschicht auf den Nickelpartikeln der Nickelschicht aus einer Mangan(II)-salzlösung,
c) Oxidieren der Mangan(II)-hydroxidschicht zu einer Mangandioxidschicht.

Gegenstand der Erfindung ist ebenso die Verwendung der erfindungsgemäßen reversiblen Mangandioxidelektrode als Arbeitselektrode in wiederaufladbaren alkalischen Batteriesystemen, insbesondere Alkali-Mangan-Batterien beziehungsweise sekundären Alkali-Mangan-Zellen.

Gegenstand der Erfindung ist schließlich eine wiederaufladbare alkalische Mangan-Batterie, insbesondere Alkali-Mangan-Batterie beziehungsweise sekundäre Alkali-Mangan-Zelle, enthaltend als Arbeitselektrode eine erfindungsgemäße, reversible Mangandioxidelektrode.

### DETAILLIERTE BESCHREIBUNG DER ERFINDUNG

Die erfindungsgemäße Mangandioxidelektrode, welche insbesondere für alkalisch-wässrige Elektrolyte vorgesehen ist, zeichnet sich dadurch aus, dass bei deren Einsatz als Arbeitselektrode in einer Alkali-Mangan-Zelle mit alkalischem Elektrolyt Entladestromraten von bis zu 150 C möglich sind, wobei die Zelle selbst nach 100 Zyklen noch keinen erkennbaren Kapazitätsverlust aufweist.

Die erfindungsgemäßen Elektroden zeigen eine anfängliche Formierungsreaktion, bei der etwa 30 Zyklen benötigt werden, um die vollständige Kapazität auszubilden. Damit eignen sich die erfindungsgemäßen Mangandioxidelektroden als positive Elektroden für den Einsatz in wiederaufladbaren alkalischen Batteriesystemen, insbesondere Alkali-Mangan-Batterien.

Die erfindungsgemäße Mangandioxidelektrode ist so aufgebaut, dass auf einem elektrisch leitfähigen Trägermaterial mit einer Nickeloberfläche, vorzugsweise einem Nickelbelch, eine Nickelschicht aus aneinander haftenden, sphärischen Nickelpartikeln mit einer inneren Porenstruktur vorgesehen ist. Auf die Nickelpartikel der Nickelschicht wird dann eine Mangandioxidschicht aufgebracht, wobei die Mangandioxidschicht auch in der inneren Porenstruktur der Nickelpartikel vorhanden ist. Dabei kann die Mangandioxidschicht die innere Porenstruktur teilweise oder vollständig ausfüllen, sodass die innere Oberfläche der Poren teilweise oder vollständig mit Mangandioxid bedeckt ist. Während die Nickelpartikel der Nickelschicht eine innere Porenstruktur aufweisen, besitzt die Nickelschicht auch eine äußere Porenstruktur, die durch die Hohlräume zwischen den einzelnen Nickelpartikeln definiert wird. Auch diese äußere Porenstruktur kann teilweise mit Mangandioxid bedeckt sein, insbesondere in Oberflächenbereichen, welche dem Trägermaterial gegenüberliegen.

Das elektrisch leitfähige Trägermaterial mit einer Nickeloberfläche kann nicht nur ein Nickelblech sein, sondern auch eine Nickelfolie oder mit Nickel beschichtete Trägermaterialien, einschließlich mit Nickel beschichtete Metall- oder Kunststofffolien, wie Stahlfolien, oder mit Nickel beschichtete Vlies- oder Gewebetextilien. Solche elektrisch leitfähigen Gewebe auf Basis nickelbeschichteter Vlies- und Gewebetextilien sind im Handel erhältlich und bestehen beispielsweise aus Polyester, welche durch eine Nickelbeschichtung elektrisch leitfähig gemacht werden. Somit haben diese Gewebe ähnlich gute elektrische Eigenschaften wie Metall bei gleichzeitig großer Materialflexibilität und einem leichten Gewicht.

Gemäß der Erfindung hat sich gezeigt, dass durch Verwendung einer solchen nanostrukturierten Nickelelektrode als Elektrodengrundstruktur und Aufbringen einer Mangandioxidschicht auf eine solche nanostrukturierte Nickelektrode, reversible Mangandioxidelektroden mit den vorgenannten vorteilhaften Eigenschaften erhalten werden können. Unter nanostrukturierten Nickelelektroden werden hierbei Nickelelektroden verstanden, die eine Nickelschicht aus aneinander haftenden, sphärischen, porösen Nickelpartikeln aufweisen, wobei die Nickelpartikel eine innere Porenstruktur mit einer hohen inneren Oberfläche aufweisen. Die Poren weisen hierbei einen Durchmesser von wenigen 100 nm auf, vorzugsweise von bis zu 100 nm.

Solche Nickelelektroden und Verfahren zu deren Herstellung werden in der WO 2017/085173 A1 beschrieben. Das Verfahren zur Herstellung solcher Nickelektroden umfasst folgende Schritte:
a) Vorsehen von sphärischen Nickelhydroxidpartikeln,
b) partielle Reduzierung der sphärischen Nickelhydroxidpartikel in einer reduzierenden Atmosphäre bei erhöhten Temperaturen zur Erzielung partiell reduzierter, sphärischer Ni/NiO-Partikel,
c) Herstellen einer Paste aus den erhaltenen Ni/NiO-Partikeln und einem organischen und/oder anorganischen Bindemittel sowie gegebenenfalls weiteren Hilfsstoffen,
d) Aufbeschichten der Paste auf eine oder beide Seiten eines elektrisch leitfähigen Trägermaterials mit einer Nickeloberfläche, insbesondere eines Nickelblechs, und
e) Tempern des beschichteten Trägermaterials in einer reduzierenden Atmosphäre bei erhöhten Temperaturen.

Bei der erfindungsgemäßen Mangandioxidelektrode weist die Nickelschicht vor dem Aufbringen der Mangandioxidschicht vorzugsweise eine Dicke im Bereich von 10 - 1000 µm, weiter vorzugsweise 20 - 500 µm, noch weiter vorzugsweise 50 - 200 µm, und insbesondere bevorzugt etwa 100 µm auf.

Die sphärischen Nickelpartikel der Nickelschicht besitzen vorzugsweise eine mittlere Partikelgröße von 0,1 - 25 µm, weiter vorzugsweise 1 - 10 µm, insbesondere weiter bevorzugt 2 - 6 µm, und besonders bevorzugt 3 - 4 µm auf.

Beim Verfahren zur Herstellung einer erfindungsgemäßen Mangandioxidelektrode wird zunächst eine wie oben beschriebene Nickelelektrode als Elektrodengrundstruktur vorgesehen. Auf den Nickelpartikeln der Nickelschicht wird dann eine Mangan(II)-hydroxidschicht aus einer Mangan(II)-salzlösung abgeschieden. Das Abscheiden der Mangan(II)-hydroxidschicht erfolgt hierbei vorzugsweise elektrochemisch in an sich bekannter Weise, wobei als Mangan(II)-salzlösung vorzugsweise eine Mangannitratlösung eingesetzt wird. Beispielsweise erfolgt eine potentiostatische Abscheidung gegenüber einer Ag/AgCl-Referenzelektrode aus einer wässrigen Mangannitratlösung. Die benötigte Strommenge für die Abscheidung kann hierbei nach dem Faradayschen Gesetz in an sich bekannter Weise errechnet werden. Bei diesem Prozess wird das Nitration zum Nitrition reduziert, wobei Hydroxidionen gebildet werden. Die gebildeten Hydroxidionen fällen das Mangan(II)-hydroxid auf den Nickelpartikeln aus.

Eine Mangandioxidschicht kann natürlich auch aus anderen Manganverbindungen abgeschieden werden, beispielsweise aus Kaliumpermanganat.

In einem weiteren Schritt wird dann die Mangan(II)-hydroxidschicht zu einer Mangandioxidschicht oxidiert. Hierbei können bekannte Oxidationsmittel verwendet werden, wie etwa gewählt aus der Gruppe Wasserstoffperoxid, Kaliumperoxodisulfat, Kaliumpermanganat, Natriumhypochlorit, Dichloroxid, Sauerstoff, wie Luftsauerstoff und Ozon.
Vorzugsweise erfolgt beim erfindungsgemäßen Verfahren die Oxidation mittels einer alkalischen Lösung von Wasserstoffperoxid, insbesondere bevorzugt einer wässrigen Lösung von Kaliumhydroxid und Wasserstoffperoxid. Besonders geeignet ist beispielsweise eine 1: 1-Lösung von 0,1 M KOH und 0,1 M H₂O₂.

Die Mangandioxidschicht der erfindungsgemäßen Mangandioxidelektrode weist vorzugsweise eine Dicke im Bereich vom 1 - 50 µm, weiter vorzugsweise 2 - 30 µm, noch weiter vorzugsweise 5 - 20 µm, und insbesondere bevorzugt 5 - 10 µm auf. Diese Dickenangaben beziehen sich auf die sogenannte Äquivalentschichtdicke, worunter die Schichtdicke zu verstehen ist, die sich auf einem vollkommen planaren Trägermaterial ergeben würde. Im Falle des elektrochemischen Abscheidens der Mangan(II)-hydroxidschicht als Zwischenstufe wird zur Erzielung einer gewünschten Äquivalentschichtdicke an Mangandioxid eine entsprechende Menge an Mangan(II)-hydroxid pro 1 cm² Elektrodenfläche benötigt. Die für die Abscheidung des entsprechenden Flächengewichts an Mangan(II)-hydroxid benötigte Strommenge kann in an sich bekannter Weise nach dem Faradayschen Gesetz berechnet werden. Beispielsweise ergibt eine Beladung des Elektroden-Trägermaterials mit 2,54 mg/cm² Mn(OH)₂ rechnerisch eine Äquivalentschichtdicke von gerundet 5 µm MnO₂. Eine Beladung des Elektroden-Trägermaterials mit 5,08 mg/cm² Mn(OH)₂ entspricht rechnerisch einer Äquivalentschichtdicke von gerundet 10 µm MnO₂.

### KURZE BESCHREIBUNG DER ZEICHNUNGEN

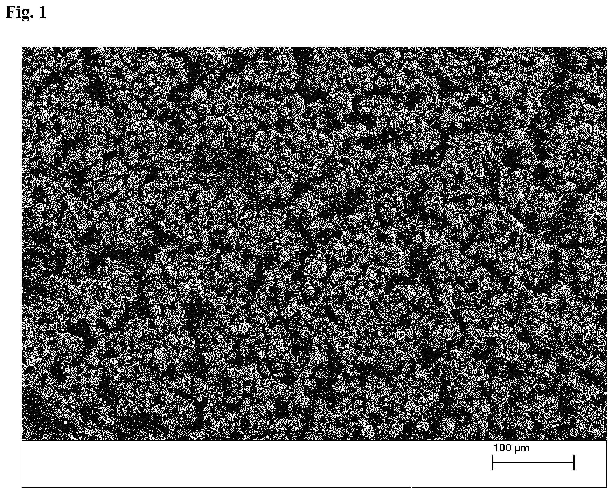

**Fig. 1** zeigt eine REM-Aufnahme der Oberfläche einer zur Herstellung einer erfindungsgemäßen Mangandioxidelektrode als Elektrodengrundstruktur verwendeten Nickelelektrode bei fünfhundertfacher Vergrößerung;

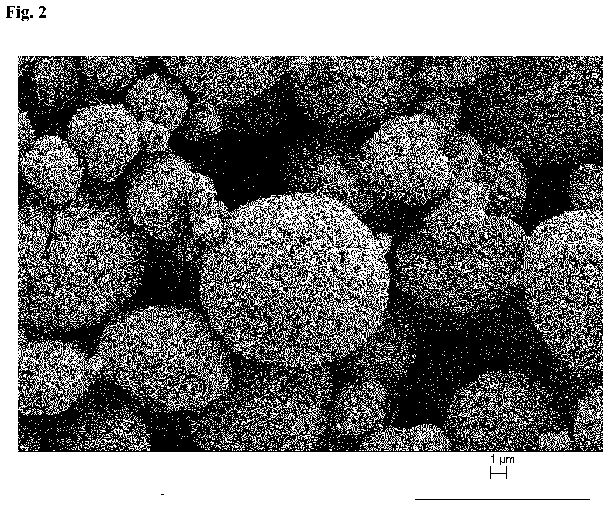

**Fig. 2** zeigt eine REM-Aufnahme der in Fig. 1 gezeigten Nickelelektrode bei zehntausendfacher Vergrößerung;

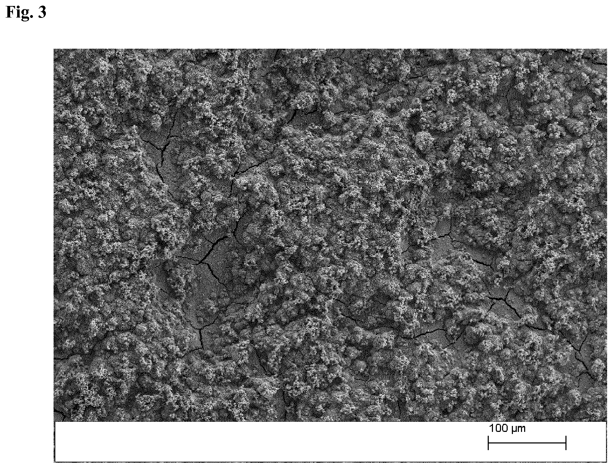

**Fig. 3** zeigt eine REM-Aufnahme der Oberfläche einer erfindungsgemäßen Mangandioxidelektrode mit einer 5 µm-dicken Mangandioxidschicht bei fünfhundertfacher Vergrößerung;

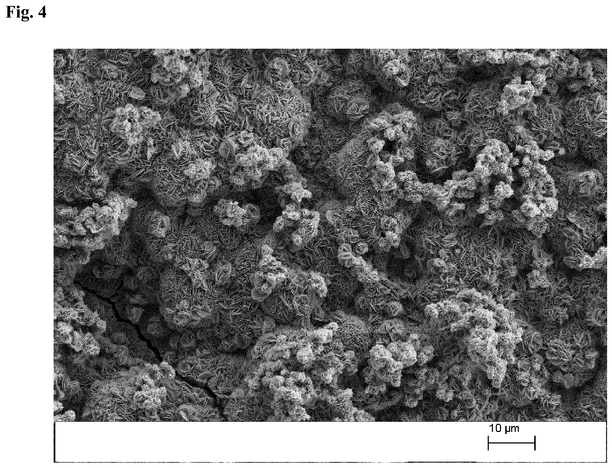

**Fig. 4** zeigt eine REM-Aufnahme der in Fig. 3 gezeigten Mangandioxidelektrode bei dreitausendfacher Vergrößerung;

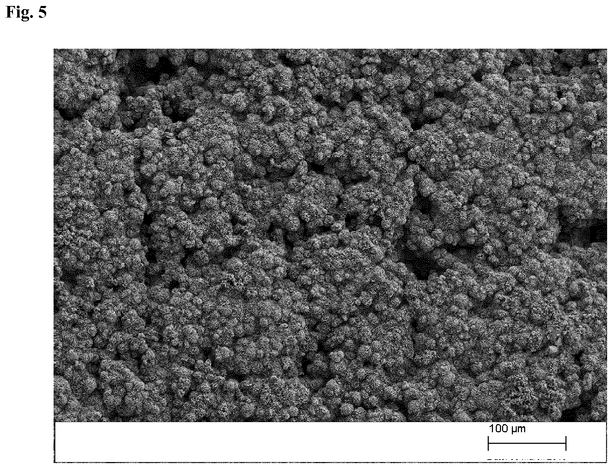

**Fig. 5** zeigt eine REM-Aufnahme der Oberfläche einer erfindungsgemäßen Mangandioxidelektrode mit einer 10 µm-dicken Mangandioxidschicht bei fünfhundertfacher Vergrößerung;

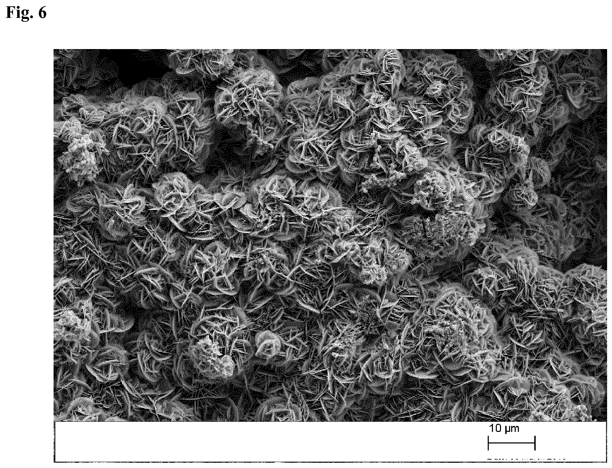

**Fig. 6** zeigt eine REM-Aufnahme der in Fig. 5 gezeigten Mangandioxidelektrode bei dreitausendfacher Vergrößerung;
**Fig. 7** zeigt Entladungsdiagramme erfindungsgemäßer Mangandioxidelektroden mit einer Mangandioxid-Schichtdicke von etwa 5 µm;
**Fig. 8** zeigt Entladungsdiagramme erfindungsgemäßer Mangandioxidelektroden mit einer Mangandioxid-Schichtdicke von etwa 10 µm.

### BEVORZUGTE AUSFÜHRUNGSFORMEN UND AUSFÜHRUNGSBEISPIELE

### Beispiel 1 (Herstellung einer Mangandioxidelektrode mit MnO₂-Schichtdicke von etwa 5 µm)

Im ersten Schritt wird eine etwa 5 µm Mn(OH)₂-Schicht elektrochemisch auf nanostrukturierten Nickelelektroden durch potentiostatische Abscheidung bei -1,1 V gegenüber der Ag/AgCl-Referenzelektrode aus frisch hergestellter, wässriger 1M Mn(NO₃)₂-Lösung abgeschieden. Die Strommenge für die Abscheidung von 2,54 mg Mn(OH)₂ pro 1 cm² Elektrodenfläche ergibt sich nach dem Faradayschen Gesetz zu 1,567 mAh. Nach der Herstellung der Mn(OH)₂-Schicht wird die Elektrode gründlich mit de-ionisiertem Wasser gespült.

Im zweiten Schritt wird die so hergestellte Elektrode mit einer 1:1-Lösung von 0,1 M KOH und 0,1 M H₂O₂ für 10 bis 12 Stunden bei Raumtemperatur zu MnO₂ oxidiert. Rechnerisch ergeben sich hierbei 2,48 mg MnO₂ pro 1 cm². Mit der Dichte von 5,03 g/cm³ für MnO₂ ergibt sich dann eine Äquivalentschichtdicke von rechnerisch 4,93 µm MnO₂ und gerundet etwa 5 µm. Nach der Herstellung der MnO₂-Schicht wird die Elektrode gründlich mit de-ionisiertem Wasser gespült und anschließend bei 40° C für 5 Stunden getrocknet.

### Beispiel 2 (Herstellung einer Mangandioxidelektrode mit MnO₂-Schichtdicke von etwa 10 µm)

Im ersten Schritt wird eine etwa 10 µm Mn(OH)₂-Schicht elektrochemisch auf nanostrukturierten Nickelelektroden durch potentiostatische Abscheidung bei -1,1 V gegenüber der Ag/AgCl-Referenzelektrode aus frisch hergestellter, wässriger 1 M Mn(NO₃)₂-Lösung abgeschieden. Die Strommenge für die Abscheidung von 5,08 mg Mn(OH)₂ pro 1 cm² Elektrodenfläche ergibt sich nach dem Faradayschen Gesetz zu 3,134 mAh. Nach der Herstellung der Mn(OH)₂-Schicht wird die Elektrode gründlich mit de-ionisiertem Wasser gespült.

Im zweiten Schritt wird die so hergestellte Elektrode mit einer 1:1-Lösung von 0,1 M KOH und 0,1 M H₂O₂ für 10 bis 12 Stunden bei Raumtemperatur zu MnO₂ oxidiert. Rechnerisch ergeben sich hierbei 4,96 mg MnO₂ pro 1 cm². Das ergibt rechnerisch eine Äquivalentschichtdicke von 9,86 µm Mn02 und gerundet etwa 10 µm. Nach der Herstellung der MnO₂-Schicht wird die Elektrode gründlich mit de-ionisiertem Wasser gespült und anschließend bei 40° C für 5 Stunden getrocknet.

### Beispiel 3 (Zyklisierung und Entladung der erfindungsgemäßen Elektroden)

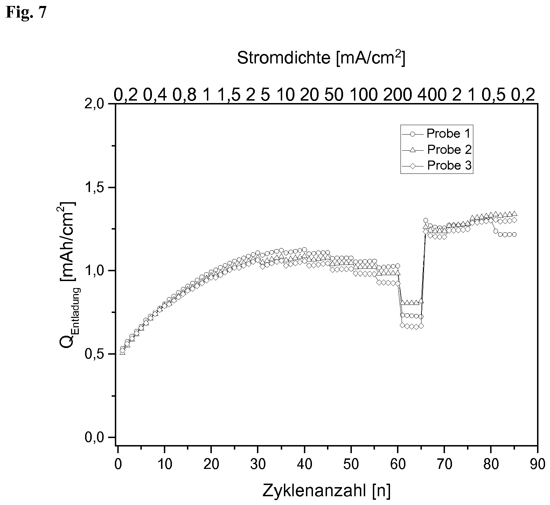

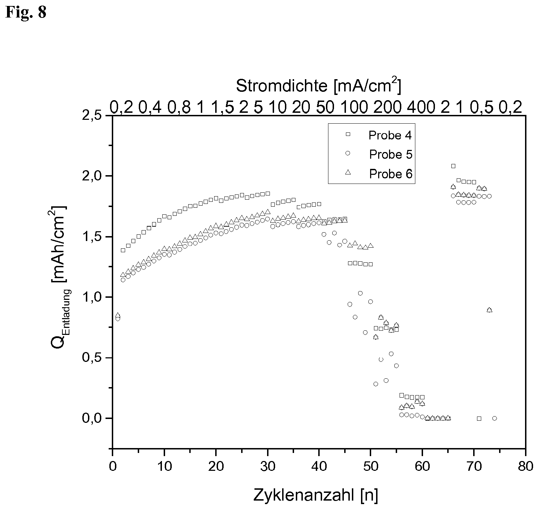

Jeweils drei Proben der in Beispiel 1 (Schichtdicke etwa 5 µm) und Beispiel 2 (Schichtdicke etwa 10 µm) hergestellten Elektroden wurden mit unterschiedlichen Stromdichten bis 400 mA/cm² entladen. Die hierbei erhaltenen Entladungsdiagramme sind in den Fig. 7 und 8 gezeigt.

Es zeigt sich, dass die hergestellten Elektroden eine anfängliche Formierungsreaktion von etwa 30 Zyklen durchlaufen, bevor sie ihre vollständige Kapazität erreichen.

Die MnO₂-Elektroden mit einer Beschichtungsdicke von 5 µm (Beispiel 1 und Fig. 7) weisen eine maximale Kapazität von 1,27 mAh/cm² auf und können bis 200 mA/cm² bzw. 157 C ohne signifikanten Kapazitätsverlust entladen werden (Fig. 7).

Die MnO₂-Elektroden mit einer Beschichtungsdicke von 10 µm (Beispiel 2 und Fig. 8) weisen eine maximale Kapazität von 1,92 mAh/cm² und können bis 50 mA/cm² bzw. 26 C ohne signifikanten Kapazitätsverlust entladen werden (Fig. 8).

Dass die Verdoppelung der MnO₂-Schichtdicke nicht zur Verdoppelung der Flächenkapazität führt, liegt daran, dass die als Grundelektrodenstruktur eingesetzten Nickelelektroden bereits eine eigene Kapazität von etwa 0,55 mAh/cm² mitbringen. Berücksichtigt man diese Kapazität der Nickelelektrode ergibt sich eine gerundete Kapazität für die MangandioxidSchicht von etwa 1,4 mAh pro 10 µm Schichtdicke.

Die Entladungen erfolgten jeweils auf einer 1 cm² Elektrode in 6,0 M KOH.

## Patentansprüche

1. Reversible Mangandioxidelektrode zur Verwendung in alkalischen Batteriesystemen, umfassend ein elektrisch leitfähiges Trägermaterial mit einer Nickeloberfläche, eine auf dem Trägermaterial aufgebrachte Nickelschicht aus aneinander haftenden, sphärischen Nickelpartikeln mit einer inneren Porenstruktur und eine auf den Nickelpartikeln aufgebrachte Mangandioxidschicht, wobei die Mangandioxidschicht auch in der inneren Porenstruktur der Nickelpartikel vorhanden ist.

2. Reversible Mangandioxidelektrode nach Anspruch 1, wobei die Nickelschicht vor dem Aufbringen der Mangandioxidschicht eine Dicke im Bereich von 10-1000 µm, vorzugsweise 20-500 µm, weiter vorzugsweise 50-200 µm, insbesondere bevorzugt etwa 100 µm, aufweist.

3. Reversible Mangandioxidelektrode nach Anspruch 1 oder 2, wobei die sphärischen Nickelpartikel der Nickelschicht eine mittlere Partikelgröße von 0,1-25 µm, vorzugsweise 1-10 µm, weiter vorzugsweise 2-6 µm, insbesondere bevorzugt 3-4 µm, aufweisen.

4. Reversible Mangandioxidelektrode nach irgendeinem der vorangehenden Ansprüche, wobei das elektrisch leitfähige Trägermaterial mit einer Nickeloberfläche ausgewählt ist aus Nickelblech, Nickelfolie oder mit Nickel beschichteten Trägermaterialien.

5. Reversible Mangandioxidelektrode nach Anspruch 4, wobei das elektrisch leitfähige Trägermaterial mit einer Nickeloberfläche ein Nickelblech ist.

6. Reversible Mangandioxidelektrode nach irgendeinem der vorangehenden Ansprüche, wobei die Mangandioxidschicht eine Dicke im Bereich von 1-50 µm, vorzugsweise 2-30 µm, weiter vorzugsweise 5-20 µm, insbesondere bevorzugt 5-10 µm, aufweist.

7. Verfahren zur Herstellung einer reversiblen Mangandioxidelektrode nach mindestens einem der vorangehenden Ansprüche, umfassend folgender Schritte:
a) Vorsehen einer Elektrodenstruktur aus einem elektrisch leitfähigen Trägermaterial mit einer Nickeloberfläche und einer auf dem Trägermaterial aufgebrachten Nickelschicht aus aneinander haftenden, sphärischen, porösen Nickelpartikeln mit einer inneren Porenstruktur,
b) Abscheiden einer Mangan(II)-hydroxidschicht auf den Nickelpartikeln der Nickelschicht aus einer Mangan(II)-salzlösung,
c) Oxidieren der Mangan(II)-hydroxidschicht zu einer Mangandioxidschicht.

8. Verfahren nach Anspruch 7, wobei das Abscheiden einer Mangan(II)-hydroxidschicht in Schritt b) elektrochemisch durchgeführt wird.

9. Verfahren nach Anspruch 7 oder 8, wobei in Schritt b) als Mangan(II)-salzlösung eine Mangannitratlösung eingesetzt wird.

10. Verfahren nach irgendeinem der Ansprüche 7 bis 9, wobei in Schritt c) ein Oxidationsmittel verwendet wird, gewählt aus der Gruppe Wasserstoffperoxid, Kaliumperoxodisulfat, Kaliumpermanganat, Natriumhypochlorit, Dichloroxid, Sauerstoff und Ozon.

11. Verfahren nach Anspruch 10, wobei das Oxidieren in Schritt c) mittels einer alkalischen Lösung von Wasserstoffperoxid durchgeführt wird.

12. Verfahren nach Anspruch 11, wobei als alkalische Lösung von Wasserstoffperoxid eine wässrige Lösung von Kaliumhydroxid und Wasserstoffperoxid verwendet wird.

13. Verwendung der reversiblen Mangandioxidelektrode nach mindestens einem der Ansprüche 1 bis 6 als Arbeitselektrode in wieder aufladbaren alkalischen Batteriesystemen, insbesondere Alkali-Mangan-Batterien.

14. Wieder aufladbare alkalische Mangan-Batterie, insbesondere Alkali-Mangan-Batterie, enthaltend als Arbeitselektrode eine reversible Mangandioxidelektrode nach mindestens einem der Ansprüche 1 bis 6.

## Claims

1. Reversible manganese dioxide electrode for use in alkaline battery systems, comprising an electrically conductive carrier material having a nickel surface, a nickel layer made of spherical nickel particles adhering to each other and having an inner pore structure applied to the carrier material, and a manganese dioxide layer applied to the nickel particles, wherein the manganese dioxide layer is also present in the inner pore structure of the nickel particles.

2. Reversible manganese dioxide electrode according to claim 1, wherein the nickel layer before the application of the manganese dioxide layer has a thickness in the range of 10-1000 µm, preferably 20-500 µm, more preferably 50-200 µm, particularly preferably about 100 µm.

3. Reversible manganese dioxide electrode according to either claim 1 or claim 2, wherein the spherical nickel particles of the nickel layer have an average particle size of 0.1-25 µm, preferably 1-10 µm, more preferably 2-6 µm, particularly preferably 3-4 µm.

4. Reversible manganese dioxide electrode according to any of the preceding claims, wherein the electrically conductive carrier material having a nickel surface is selected from a nickel sheet, a nickel foil, or nickel-coated carrier materials.

5. Reversible manganese dioxide electrode according to claim 4, wherein the electrically conductive carrier material having a nickel surface is a nickel sheet.

6. Reversible manganese dioxide electrode according to any of the preceding claims, wherein the manganese dioxide layer has a thickness in the range of 1-50 µm, preferably 2-30 µm, more preferably 5-20 µm, particularly preferably 5-10 µm.

7. Method for the production of a reversible manganese dioxide electrode according to at least one of the preceding claims, comprising the following steps:
a) Providing an electrode structure made of an electrically conductive carrier material having a nickel surface and a nickel layer made of spherical, porous nickel particles adhering to each other and having an inner pore structure applied to the carrier material,
b) Depositing a manganese(II)-hydroxide layer onto the nickel particles of the nickel layer from a manganese(II)-salt solution,
c) Oxidizing the manganese(II)-hydroxide layer to a manganese dioxide layer.

8. Method according to claim 7, wherein the deposition of a manganese(II)-hydroxide layer in step b) is carried out electrochemically.

9. Method according to either claim 7 or claim 8, wherein in step b) a manganese nitrate solution is used as the manganese(II)-salt solution.

10. Method according to any of claims 7 to 9, wherein in step c) an oxidizing agent is used, selected from the group of hydrogen peroxide, potassium peroxodisulfate, potassium permanganate, sodium hypochlorite, dichloroxide, oxygen, and ozone.

11. Method of claim 10, wherein the oxidation in step c) is carried out by means of an alkaline solution of hydrogen peroxide.

12. Method of claim 11, wherein an aqueous solution of potassium hydroxide and hydrogen peroxide is used as the alkaline solution of hydrogen peroxide.

13. Use of the reversible manganese dioxide electrode according to at least one of claims 1 to 6 as a working electrode in rechargeable alkaline battery systems, in particular alkaline-manganese batteries.

14. Rechargeable alkaline-manganese battery, in particular alkaline-manganese battery, containing a reversible manganese dioxide electrode as working electrode according to at least one of claims 1 to 6.

## Revendications

1. Électrode réversible en dioxyde de manganèse pour une utilisation dans des systèmes de batteries alcalines, comportant un matériau de support électriquement conducteur avec une surface en nickel, une couche de nickel appliquée sur le matériau de support et constituée de particules de nickel sphériques adhérant les unes aux autres avec une structure de pores interne, et une couche de dioxyde de manganèse appliquée sur les particules de nickel, dans laquelle la couche de dioxyde de manganèse est également présente dans la structure de pores interne des particules de nickel.

2. Électrode réversible en dioxyde de manganèse selon la revendication 1, dans laquelle la couche de nickel avant l'application de la couche de dioxyde de manganèse a une épaisseur dans la plage de 10 à 1000 µm, de manière préféré de 20 à 500 µm, de manière plus préférée de 50 à 200 µm, de manière particulièrement préférée d'environ 100 µm.

3. Électrode réversible en dioxyde de manganèse selon la revendication 1 ou 2, dans laquelle les particules de nickel sphériques ont une taille de particule moyenne de 0,1 à 25 µm, de manière préférée de 1 à 10 µm, de manière plus préférée de 2 à 6 µm, de manière particulièrement préférée de 3 à 4 µm.

4. Électrode réversible en dioxyde de manganèse selon l'une quelconque des revendications précédentes, dans laquelle le matériau de support électriquement conducteur avec une surface en nickel est choisi parmi une tôle de nickel, une feuille de nickel ou des matériaux de support revêtus de nickel.

5. Électrode réversible en dioxyde de manganèse selon la revendication 4, dans laquelle le matériau de support électriquement conducteur avec une surface en nickel est une tôle de nickel.

6. Électrode réversible en dioxyde de manganèse selon l'une quelconque des revendications précédentes, dans laquelle la couche de dioxyde de manganèse a une épaisseur dans la plage de 1 à 50 µm, de manière préférée de 2 à 30 µm, de manière plus préférée de 5 à 20 µm, de manière particulièrement préférée de 5 à 10 µm.

7. Procédé pour fabriquer une électrode réversible en dioxyde de manganèse selon au moins une des revendications précédentes, comportant les étapes suivantes consistant à :
a) prévoir une structure d'électrode constituée d'un matériau de support électriquement conducteur avec une surface en nickel et une couche de nickel appliquée sur le matériau de support et constituée de particules de nickel poreuses, sphériques et adhérant les unes aux autres avec une structure de pores interne,
b) déposer une couche d'hydroxyde de manganèse(II) sur les particules de nickel de la couche de nickel, à partir d'une solution de sel de manganèse(II),
c) oxyder la couche d'hydroxyde de manganèse(II) en une couche de dioxyde de manganèse.

8. Procédé selon la revendication 7, dans lequel la séparation d'une couche d'hydroxyde de manganèse(II) à l'étape b) est réalisée par voie électrochimique.

9. Procédé selon la revendication 7 ou 8, dans lequel à l'étape b), une solution de nitrate de manganèse est utilisée comme solution de sel de manganèse(II).

10. Procédé selon l'une quelconque des revendications 7 à 9, dans lequel à l'étape c), un agent oxydant choisi parmi le groupe constitué de peroxyde d'hydrogène, de peroxodisulfate de potassium, de permanganate de potassium, d'hypochlorite de sodium, de dioxyde de chlore, d'oxygène et d'ozone, est utilisé.

11. Procédé selon la revendication 10, dans lequel l'oxydation à l'étape c) est réalisée au moyen d'une solution alcaline de peroxyde d'hydrogène.

12. Procédé selon la revendication 11, dans lequel une solution aqueuse d'hydroxyde de potassium et de peroxyde d'hydrogène est utilisée comme solution alcaline de peroxyde d'hydrogène.

13. Utilisation de l'électrode réversible en dioxyde de manganèse selon au moins une des revendications 1 à 6 en tant qu'électrode de travail dans des systèmes de batteries alcalines rechargeables, en particulier des batteries alcalines-manganèse.

14. Batterie alcaline-manganèse rechargeable, en particulier batterie alcaline-manganèse, contenant une électrode réversible en dioxyde de manganèse en tant qu'électrode de travail selon au moins une des revendications 1 à 6.
